# EUROPEAN PATENT SPECIFICATION

(11) **EP 3 766 730 B1**
(45) Date of publication and mention of the grant of the patent: **11.10.2023**
(21) Application number: 19186961.9
(22) Date of filing: 18.07.2019
(51) Int. Cl.: B60M 1/32, B60M 1/14

(54) **SYSTEM FOR CARRYING CONTACT WIRES**
SYSTEM ZUM TRAGEN VON KONTAKTDRÄHTEN
SYSTÈME POUR PORTER DES FILS DE CONTACT

(43) Date of publication of application: 20.01.2021
(73) Proprietor: Furrer + Frey AG, 3000 Bern 6 (CH)
(72) Inventor: Casali, Bruno, 3125 Toffen (CH)
(74) Representative: von Bülow & Tamada

(56) References cited:
- CH-A- 261 532
- DE-B- 1 062 730
- GB-A- 2 539 301
- US-A- 2 225 766

## Description

The present invention relates to a system for carrying a first contact wire and a second contact wire above a railroad switch and a catenary junction comprising that system.

Such a system is used for example in railway depots, where different railway tracks often crosses each other. In conventional systems, where a first railroad track crosses a second railroad track, a first contact wire that is adapted to supply a train on the first railroad track with electric power and a second contact wire that is adapted to supply a train on the second railroad track with electric power converge each other with the run of the two railroad tracks. Shortly before the crossing point of the railroad tracks, the two catenaries are kept in a distance to each other and fed approximately in parallel to each other. Shortly after the crossing point, the two catenaries are conducted apart from each other, such that the first contact wire supplies a train on the second railroad track with electric energy and the second contact wire supplies a train on the first railroad track with electric energy.

Document CH 261 532 A discloses a system according to the preamble part of claim 1.

It is object of the invention to improve the known system.

The object is solved by the features of the independent claims.

Advantageous embodiments are subject of the dependent claims.

According to an aspect of the invention, a system for carrying a first contact wire and a second contact wire crossing or merging the first contact wire through an interruption above a railway junction, comprises the features of claim 1.

The provided system is based on the thought that the system mentioned in the beginning requires a comparatively higher amount of supporting structures that carry the catenary switch. The reason is that seen in the driving direction before entering the railroad switch, the catenaries are formed with a convexity that steadily changes its direction, which in turn has a negative impact on the track guiding. To ensure the track guiding, the before mentioned higher amount of supporting structures is required. To reduce the before mentioned amount of supporting structures, it is proposed with the provided system to cross or merge the catenaries and to steadily guide the first contact wire above the first railroad track and the second contact wire above the second railroad track.

This is achieved by a supporting beam that basically carries the first contact wire at two different points. The spacer guarantees a minimum length of the interruption of the first contact wire seen in the direction of the first contact wire, such that even in case of thermal agitations, no mechanical stress will be introduced into the second contact wire. By that means, the catenary junction can be embodied as cross and the before mentioned negative impact of the convexity of the catenary on the track guiding is reduced, which in turn reduces the need for a higher amount of supporting structures.

In an embodiment of the provided system, the spacer is an element that is rotatably mounted to the supporting beam. By that means, the crossing or merging angle of the two catenaries can be easily adjusted, when installing the system on a railroad track.

According to the invention, the spacer includes a disc intersected by a slot that is adapted to receive the second contact wire. The disk fills the space generated by the interruption of the first contact wire and reduces therefore unevennesses for a panthograph taking electric energy from the first contact wire.

In another embodiment of the provided system, the first carrying element and the second carrying element are adapted to carry the first contact wire by a form fit perpendicular to a course direction of the first contact wire. By that means, the position of the first and second carrying element on the first contact wire can be easily adjusted by moving the elements on the first contact wire in and against the course direction.

In a preferred embodiment of the provided system, the first carrying element and the second carrying element each include a securing part that is adapted to press the first contact wire against the form fit to secure the first carrying element and the second carrying element against an unintentional movement relative to the first contact wire.

In a yet another embodiment of the provided system, the first carrying element and the second carrying element are respectively carried at the supporting beam via a distance adjustment part for adjusting a distance between the supporting beam and the first contact wire perpendicular to a course direction of the first contact wire. By that means, the height of the first contact wire relative to the second contact wire can be adjusted to prevent an uneveness for the panthograph when passing the catenary switch with the provided system.

In a further another embodiment, the provided system includes a clamping cover that is attached to the supporting beam at a side opposite to the first contact wire with a gap to connect a catenary carrying the first contact wire.

According to a another aspect of the invention, a catenary junction of claim 7 is provided with a first contact wire and a second contact wire crossing or merging the first contact wire above a railway junction, comprising one of the provided system of claim 1, a first catenary carrying the first contact wire and including a first catenary part attached to a first end of the supporting beam and a second catenary part attached to a second end of the supporting beam opposite to the first end and a second catenary carrying the second contact wire and including a hollow through which the supporting beam is guided.

In an embodiment of the provided catenary junction, the hollow is a long slot that is opposite to the second contact wire and limited by a wall.

In a further embodiment of the provided catenary junction, the spacer is located in a groove of the second catenary.

The above described characteristics, features and advantages of this invention as well as the manner and way how they are achieved will get further comprehensive based on following description of the embodiments that will be explained in further detail in connection with the figures. It shows:
Fig. 1 a schematic view on a railway depot with a conventional catenary junction above a railway junction in form of a diamond crossing,
Fig. 2 a schematic view on a section of the railway depot of Fig. 1,
Fig. 3 a first perspective view on a catenary junction according to the invention with the first contact wire and the second contact wire crossing the first contact wire above the railway junction in Fig. 1,
Fig. 4 a second perspective view on the catenary junction of Fig. 2,
Fig. 5 a first perspective view on an system for carrying a first contact wire and a second contact wire crossing the first contact wire through an interruption in the catenary junction of Fig. 2, and
Fig. 6 a second perspective view on the system of Fig. 4.

In the figures, equal technical elements will be provided with equal reference signs and described only one time. The figures are only of schematic nature and does in particular not disclose any real geometric dimension.

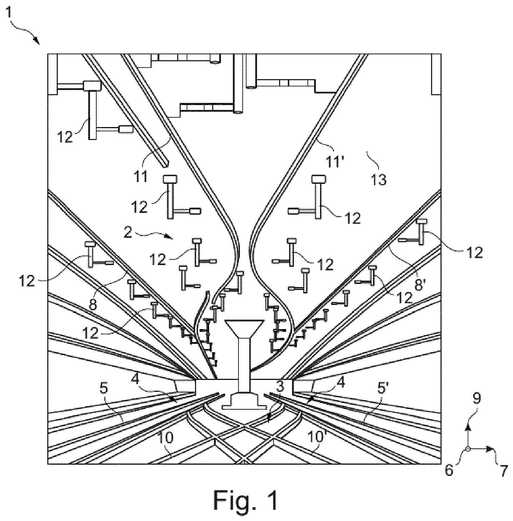

Reference is made to Fig. 1 that shows a schematic view on a railway depot 1 with a conventional catenary junction 2 above a railway junction in form of a diamond junction 3. Seen into the image plan, Fig. 1 also illustrates two railroad switches 4 as another type of a railway junction behind the diamond junction 3.

The railway junctions 3, 4 transfer a not shown train between two railway tracks 5 and 5' that extents in a driving direction 6 in Fig. 1 and are located seen in a cross direction 7 besides each other. On both railway tracks 5, 5', the train is supplied with electric energy by respective catenaries 8, 8' that are arranged seen in a height direction 9 above the catenaries 8, 8'.

For the transfer of the train, the railway junctions 3, 4 are composed of two crossing transfer railway tracks 10, 10'. The conventional catenary junction 2 is composed of two catenaries 11, 11' that each start from one of the electric catenaries 8, 8' and are arched against each other to supply an electric train with electric energy on the diamond junction. All catenaries 8, 8', 11, 11' are carried via supporting structures 12 at a ceiling 13. To reduce complexity in Fig. 1, not all supporting structures 13 are provided with an own reference sign.

It is well known, how the railway junctions 3, 4 transfer the train between the two railway tracks. Thus, further explanations thereto should be omitted.

However, in the conventional catenary junction 2, the arches have a negative impact on the track guiding of the catenaries over the railway track. To ensure the track guiding of the catenaries in the conventional catenary junction 2, the distance of the supporting structures 13 seen in the driving direction 6 must be chosen close to each other, which in turn increases the amount of required supporting structures 13.

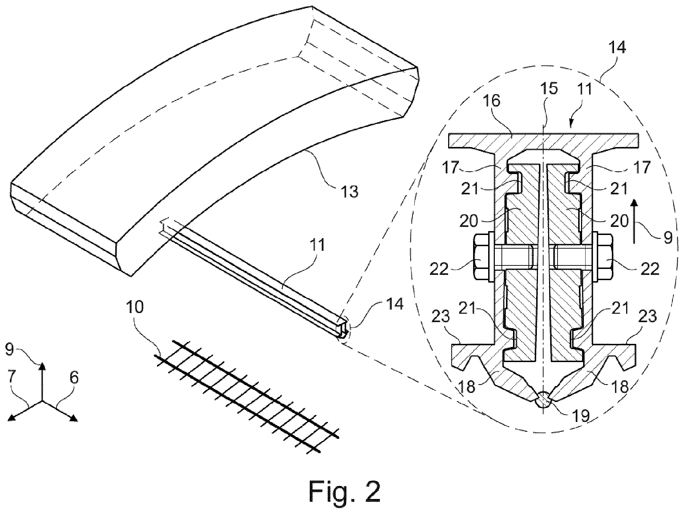

To counteract this drawback, an alternative catenary junction is proposed. Before describing this alternative catenary junction in further detail, a profile 14 of the catenaries 8, 8', 11, 11' should be described in further detail with reference to Fig. 2 and based on catenary 11.

Seen in the profile 14, the catenary 11 is formed axially symmetric to a profile axis 15. Therein, the profile axis 15 runs in parallel to the height direction 9 of the rail track 10. Seen in the height direction 9, there is a cross arm 16 at the upper side of the catenary 11 from which two tensioning arms 17 extend against the height direction 9 and in the cross direction 7. At an end of each tensioning arm 17 opposite to the cross arm 16, a clamping arm 18 is attached between which a contact wire 19 can be carried clamped by the tensioning arms 17.

The catenary 11 shown in Fig. 2 is usually composed of a plurality of catenary sections that are seen in the profile 14 of Fig. 1 positioned via connection splice plates 20 exactly against each other and fixed to each other. The exact position is defined via form fits between the connection splice plates 20 and the catenary sections that is embodied in Fig. 2 as tounge/groove-connections 21. To fix the single catenary sections to each other, screws 22 can be screwed into the connection splice plates 20.

To facilitate the insertion of the contact wire 19 between the clamping arms 18, guideways 23 extend at a connection between the clamping arms 18 and the tensioning arms 17 in respectively against the cross direction 7, on which a not shown threading trolly can be moved. As the insertion of the contact wire 19 between the clamping arms 18 is not necessary to understand the present embodiment, further explanations hereto are omitted.

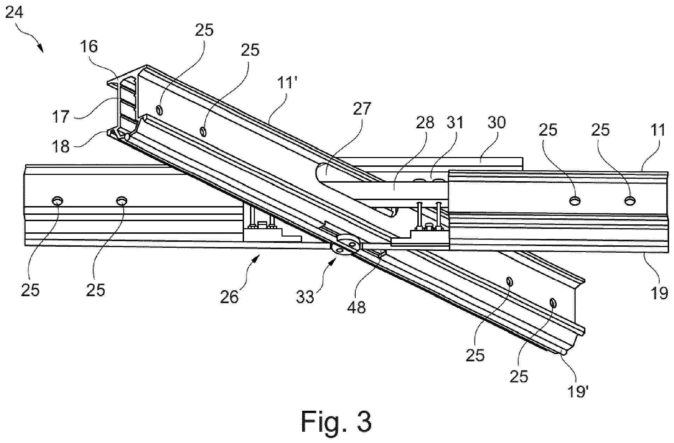

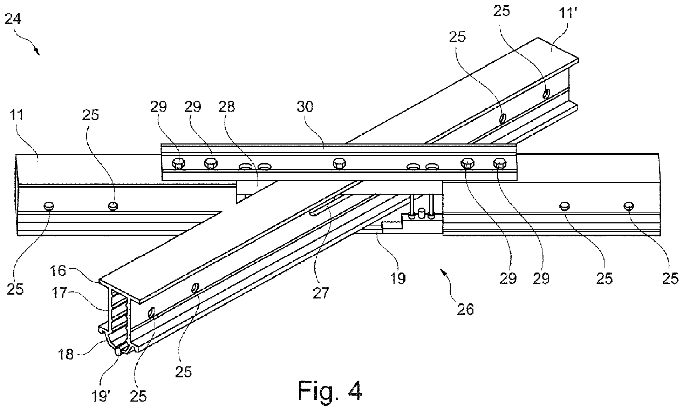

The above mentioned proposed catenary junction that ensures the track guiding with a less amount of supporting structures 13 should now be described in further detail based on Fig. 3 and 4, that respectively show first and second perspective view on the proposed catenary junction 24 that can be arranged above the diamond junction 3 in Fig. 1.

The proposed catenary junction 24 is composed of a first catenary 11 and a second catenary 11' that crosses the first catenary 11 at the proposed catenary junction 24. Both catenaries 11, 11' have the same profile that is basically the same as the profile 14 of the catenary 11 in Fig. 2. The profile of the catenaries 11, 11' in Figs. 3 and 4 differs from the profile 14 of the catenary 11 shown in Fig. 2 only by two further additional tounges on each tensioning arm 17. That is, in Figs. 3 and 4 the splice plates 20 are form fitted by four tounge/groove-connections 21 at each tensioning arm 17, instead of two tounge/groove-connections 21 at each tensioning arm 17 in Fig. 2. As this technical detail does not have any technical impact on the difference in the working principle of the proposed catenary junction 24 in view of the conventional catenary junction 2, further explanations hereto are omitted.

In Fig. 3 and 4, through holes 25 are visible for guiding the screws 22 shown in Fig. 2.

The first catenary 11 in Fig. 3 and 4 carries a first contact wire 19, whilst the second catenary 11' carries a second contact wire 19'. Both contact wires 19, 19' cross at the proposed catenary junction, which is the basic difference to the conventional catenary junction 2. In other words, the first contact wire 19 always supplies a train running on the first railway track 10, whilst the second contact wire 19' always supplies a train running on the second railway track 10'. In this crossing, the first catenary 11 is interrupted by a catenary interruption 26, wherein the second catenary 11' is guided through this catenary interruption 26. The second catenary 11' includes a hollow that is embodied as long hole 27 in Fig. 2 and 3.

Through the long hole 27, a supporting beam 28 is fed that bridges both parts of the first catenary 11. The supporting beam 28 is fixed to cross arm 16 of both parts of the first catenary 11 by fixing screws 29 that can basically be directly screwed into the cross arm 16 of the first catenary 11. In the proposed catenary junction 24, a clamping cover 30 is set on the cross arm 16 of the first catenary 11 against the height direction 9, wherein the fixing screws 29 are fed through the clamping cover 30 and the cross arm 16 before screwing into the supporting beam 28. This forms a slot 31 between the clamping cover 30 and the supporting beam 28.

When the supporting beam 28 is fed through the long hole 27 and the clamping cover 30 is placed upon the supporting beam 28 in the way mentioned before, the part of cross arm 16 of the second catenary 11' that limits the long hole 27 is placed in the slot 31. By this means, the relative height position of both catenaries 11, 11' against each other is fixed.

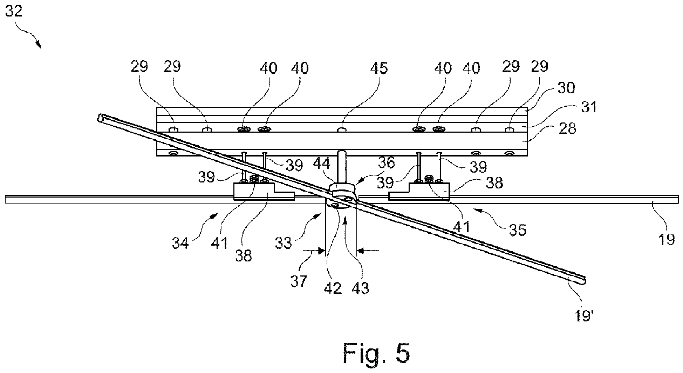

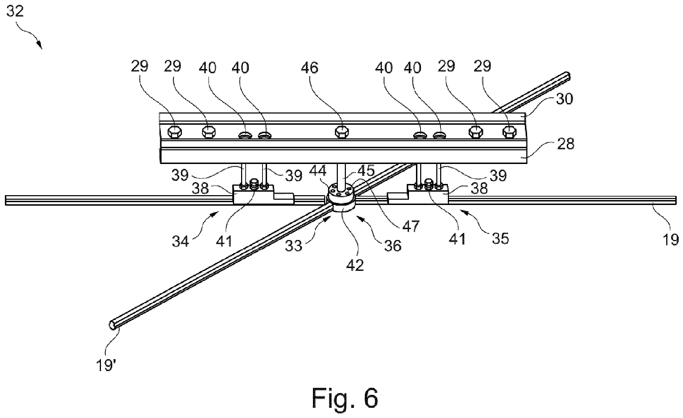

The supporting beam 28 is part of a system 32 that carries the first contact wire 19 and the second contact wire 19' in the proposed catenary junction 24. This system 32 shall be explained in further detail based on Figs. 5 and 6.

Likewise to the catenary interruption 26 in the first catenary 11, also the first contact wire 19 is interrupted by a wire interruption 33. The second catenary 19' is fed through this wire interruption 19.

The supporting beam 28 includes two carrying elements to carry the first contact wire 19'. Seen in a direction of the first contact wire 19, a first carrying element 34 is placed before the wire interruption 33, whilst a second carrying element 35 is placed after the wire interruption 33 The supporting beam 28 further carries a spacer 36 that is located in the wire interruption 33 and keeps the wire interruption 33 at a minimum length 37. This guarantees that the first contact wire 19 will not mechanically touch the second contact wire 19' and introduce mechanical stress, exemplary due to thermal agitation.

The first carrying element 34 and the second carrying element 35 are composed in the same way, but arranged mirror-inverted to each other with respect to the wire interruption 33. Each carrying element 34 includes a grapping part 38 that graps the respective contact wire 19 like the clamping arms 18. In contrast to the clamping arms 18, the grapping part 38 does not clamp the first contact wire 19, but is only slidden thereon and can thus be arbitrarily moved in the wire direction. That is the connection between the grapping parts 38 and the first contact wire 19 is a form fit, while the clamping arms 18 are connected by a force fit to the respective contact wire 19, 19'.

Each grapping part 38 is carried at the supporting beam by two carrying scews 39 that enables to carry the grapping parts exactly parallel to the first contact wire 19. To turn the carrying screws 39 through the clamping cover 30 with a screw driver, the clamping cover 30 includes respective screw driver through holes 40.

To secure a position of the grapping elements 38 seen in the direction of the first contact wire 19, a securing screw 41 can be provided at each grapping element 38. The securing screw 41 presses its respective grapping element 38 against the first contact wire 19 and effects thus a force fit.

According to the invention, the spacer 36 is provided as round shaped disc 42 that is divided by a disc slot 43 into two disc part. The disc 42 is fixed by not referenced disc screws to a foot 44 that is carried at one end of a rod 45. The other end of the rod 45 is secured by a rod screw 46 to the supporting beam. To enable mounting the disc 42 in different turning angles to the foot 44, the food 44 might include plural screw holes 47 in different angle positions around a connection point to the rod 45, into which the disc screws might be screwed. These screw holes 47 should preferably have equal angular distances to each other. In Fig. 5, only one of the screw holes 47 is provided with a reference sign for the sake of brevity.

To ensure that the spacer 36 does not generate unintended unevenness, it might be allocated in a groove 48 that is formed into the second catenary and shown in Fig. 3.

## Claims

1. System (32) for carrying a first contact wire (19) and a second contact wire (19') crossing or merging the first contact wire (19) through an interruption (33) above a railway junction (3), comprising
- a supporting beam (28),
- a first carrying element (34) that is connected to the supporting beam (28) at a first position and adapted to carry the first contact wire (19),
- a second carrying element (35) that is connected to the supporting beam (28) at a second position and adapted to carry the first contact wire (19), and
- a spacer (36) that is connected to the supporting beam (28) at a third position between the first position and the second position and adapted to secure a predefined minimum length (37) for the interruption of the first contact wire (19) seen in a course direction of the first contact wire (19),
**characterized in that**
- the spacer (36) includes a disc (42) intersected by a slot (43) that is adapted to receive the second contact wire (19').

2. System (32) according to claim 1, wherein the spacer (36) is rotatably (47) mounted to the supporting beam (28).

3. System (32) according to one of the preceding claims, wherein the first carrying element (34) and the second carrying element (35) are adapted to carry the first contact wire (19) by a form fit perpendicular to the course direction of the first contact wire (19).

4. System (32) according to claim 3, wherein the first carrying element (34) and the second carrying element (35) each include a securing part (41) that is adapted to press the first contact wire (19) against the form fit.

5. System (32) according to one of the preceding claims, wherein the first carrying element (34) and the second carrying element (35) are respectively carried at the supporting beam (28) via a distance adjustment part (39) for adjusting a distance between the supporting beam (28) and the first contact wire (19) perpendicular to the course direction of the first contact wire (19).

6. System (32) according to one of the preceding claims, including a clamping cover (30) that is attached to the supporting beam (28) at a side opposite to the first contact wire (19) with a gap (31) to connect a catenary (11) carrying the first contact wire (19).

7. Catenary junction (24) with a first contact wire (19) and a second contact wire (19') crossing or merging the first contact wire (19) above a railway junction (3), comprising:
- a system (32) according to one of the preceding claims,
- a first catenary (11) carrying the first contact wire (19) and including a first catenary part attached to a first end of the supporting beam (28) and a second catenary part attached to a second end of the supporting beam (28) opposite to the first end, and
- a second catenary (11') carrying the second contact wire (19') and including a hollow (27) through which the supporting beam (28) is guided.

8. Catenary junction (24) according to claim 7, wherein the hollow (27) is a long slot that is opposite to the second contact wire (11') and limited by a wall (16).

9. Catenary junction (24) according to claim 7 or 8, wherein the spacer (36) is located in a groove (48) of the second catenary (11').

## Patentansprüche

1. System (32) zum Tragen eines ersten Kontaktleiters (19) und eines zweiten Kontaktleiters (19), der den ersten Kontaktleiter (19) durch eine Unterbrechung (33) über einer Eisenbahnkreuzung (3) kreuzt oder verschmilzt, umfassend:
- einen Trägerbalken (28),
- ein erstes Tragelement (34), das an einer ersten Position mit dem Trägerbalken (28) verbunden ist und dazu ausgelegt ist, den ersten Kontaktleiter (19) zu tragen,
- ein zweites Tragelement (35), das an einer zweiten Position mit dem Trägerbalken (28) verbunden ist und dazu ausgelegt ist, den ersten Kontaktleiter (19) zu tragen, und
- einen Abstandhalter (36), der an einer dritten Position zwischen der ersten und der zweiten Position mit dem Trägerbalken (28) verbunden ist und dazu ausgelegt ist, eine vordefinierte Mindestlänge (37) für die Unterbrechung des ersten Kontaktleiters (19) in einer Laufrichtung des ersten Kontaktleiters (19) sicherzustellen,
**gekennzeichnet durch**
- den Abstandhalter (36), der eine Scheibe (42) umfasst, die von einem Schlitz (43) durchschnitten ist, der dazu ausgelegt ist, den zweiten Kontaktleiter (19) aufzunehmen.

2. System (32) nach Anspruch 1, wobei der Abstandhalter (36) drehbar (47) am Trägerbalken (28) montiert ist.

3. System (32) nach einem der vorhergehenden Ansprüche, wobei das erste Tragelement (34) und das zweite Tragelement (35) dazu ausgelegt sind, den ersten Kontaktleiter (19) durch eine Formschlüssigkeit senkrecht zur Laufrichtung des ersten Kontaktleiters (19) zu tragen.

4. System (32) nach Anspruch 3, wobei das erste Tragelement (34) und das zweite Tragelement (35) jeweils einen Sicherungsteil (41) umfassen, der dazu ausgelegt ist, den ersten Kontaktleiter (19) gegen die Formschlüssigkeit zu drücken.

5. System (32) nach einem der vorhergehenden Ansprüche, wobei das erste Tragelement (34) und das zweite Tragelement (35) jeweils am Trägerbalken (28) über ein Entfernungsverstellteil (39) getragen werden, um einen Abstand zwischen dem Trägerbalken (28) und dem ersten Kontaktleiter (19) senkrecht zur Laufrichtung des ersten Kontaktleiters (19) einzustellen.

6. System (32) nach einem der vorhergehenden Ansprüche, umfassend eine Klemmabdeckung (30), die an einer dem ersten Kontaktleiter (19) gegenüberliegenden Seite am Trägerbalken (28) mit einem Spalt (31) befestigt ist, um eine Oberleitung (11) zu verbinden, die den ersten Kontaktleiter (19) trägt.

7. Oberleitungskreuzung (24) mit einem ersten Kontaktleiter (19) und einem zweiten Kontaktleiter (19') die den ersten Kontaktleiter (19) über einer Eisenbahnkreuzung (3) kreuzen oder verschmelzen, umfassend:
- ein System (32) nach einem der vorhergehenden Ansprüche,
- eine erste Oberleitung (11), die den ersten Kontaktleiter (19) trägt und einen ersten Oberleitungsteil umfasst, der an einem ersten Ende des Trägerbalkens (28) befestigt ist, und einen zweiten Oberleitungsteil, der an einem dem ersten Ende gegenüberliegenden zweiten Ende des Trägerbalkens (28) befestigt ist, und
- eine zweite Oberleitung (11') die den zweiten Kontaktleiter (19) trägt und einen Hohlraum (27) umfasst, durch den der Trägerbalken (28) geführt ist.

8. Oberleitungskreuzung (24) nach Anspruch 7, wobei der Hohlraum (27) ein Langloch ist, das dem zweiten Kontaktleiter (11') gegenüberliegt und durch eine Wand (16) begrenzt ist.

9. Oberleitungskreuzung (24) nach Anspruch 7 oder 8, wobei der Abstandhalter (36) in einer Nut (48) der zweiten Oberleitung (11') platziert ist.

## Revendications

1. Système (32) pour supporter un premier fil de contact (19) et un deuxième fil de contact (19) croisant ou fusionnant avec le premier fil de contact (19) par une interruption (33) au-dessus d'une jonction ferroviaire (3), comprenant :
- une poutre de support (28),
- un premier élément de support (34) qui est connecté à la poutre de support (28) à une première position et adapté pour supporter le premier fil de contact (19),
- un deuxième élément de support (35) qui est connecté à la poutre de support (28) à une deuxième position et adapté pour supporter le premier fil de contact (19), et
- une entretoise (36) qui est connectée à la poutre de support (28) à une troisième position entre la première position et la deuxième position et adaptée pour sécuriser une longueur minimale prédéfinie (37) pour l'interruption du premier fil de contact (19) vu dans une direction de parcours du premier fil de contact (19),
**caractérisé en ce que**
- l'entretoise (36) comprend un disque (42) traversé par une fente (43) qui est adaptée pour recevoir le deuxième fil de contact (19).

2. Système (32) selon la revendication 1, dans lequel l'entretoise (36) est montée de manière rotative (47) sur la poutre de support (28).

3. Système (32) selon l'une des revendications précédentes, dans lequel le premier élément de support (34) et le deuxième élément de support (35) sont adaptés pour soutenir le premier fil de contact (19) par un ajustement de forme perpendiculaire à la direction de parcours du premier fil de contact (19).

4. Système (32) selon la revendication 3, dans lequel le premier élément de support (34) et le deuxième élément de support (35) comprennent chacun une partie de sécurisation (41) qui est adaptée pour presser le premier fil de contact (19) contre l'ajustement de forme.

5. Système (32) selon l'une des revendications précédentes, dans lequel le premier élément de support (34) et le deuxième élément de support (35) sont respectivement supportés sur la poutre de support (28) via une partie d'ajustement de distance (39) pour ajuster une distance entre la poutre de support (28) et le premier fil de contact (19) perpendiculaire à la direction de parcours du premier fil de contact (19).

6. Système (32) selon l'une des revendications précédentes, comprenant un capot de serrage (30) qui est attaché à la poutre de support (28) sur un côté opposé au premier fil de contact (19) avec un espace (31) pour connecter une caténaire (11) supportant le premier fil de contact (19).

7. Jonction de caténaire (24) avec un premier fil de contact (19) et un deuxième fil de contact (19') croisant ou fusionnant avec le premier fil de contact (19) au-dessus d'une jonction ferroviaire (3), comprenant :
- un système (32) selon l'une des revendications précédentes,
- une première caténaire (11) supportant le premier fil de contact (19) et incluant une première partie de caténaire attachée à une première extrémité de la poutre de support (28) et une deuxième partie de caténaire attachée à une deuxième extrémité de la poutre de support (28) opposée à la première extrémité, et
- une deuxième caténaire (11') supportant le deuxième fil de contact (19) et incluant un creux (27) à travers lequel la poutre de support (28) est guidée.

8. Jonction de caténaire (24) selon la revendication 7, dans laquelle le creux (27) est une fente longue qui est opposée au deuxième fil de contact (11') et limitée par un mur (16).

9. Jonction de caténaire (24) selon la revendication 7 ou 8, dans laquelle l'entretoise (36) est située dans une rainure (48) de la deuxième caténaire (11').
